Europäisches Patentamt

European Patent Office

Office européen des brevets

(11) Veröffentlichungsnummer: **0 080 664**
**B1**

(12) **EUROPÄISCHE PATENTSCHRIFT**

(45) Veröffentlichungstag der Patentschrift:
**24.10.84**

(21) Anmeldenummer: **82110680.4**

(22) Anmeldetag: **19.11.82**

(51) Int. Cl.³: **B 29 D 7/02**

(54) **Verfahren zur Herstellung von flächenförmigen Gebilden aus Vinylalkoholpolymerisaten.**

(30) Priorität: **28.11.81 DE 3147326**

(43) Veröffentlichungstag der Anmeldung:
**08.06.83 Patentblatt 83/23**

(45) Bekanntmachung des Hinweises auf die Patenterteilung:
**24.10.84 Patentblatt 84/43**

(84) Benannte Vertragsstaaten:
**BE CH DE FR GB IT LI NL SE**

(56) Entgegenhaltungen:
**DE - B - 1 202 974**
**DE - B - 1 504 442**

(73) Patentinhaber: **BASF Aktiengesellschaft,
Carl-Bosch-Strasse 38, D-6700 Ludwigshafen (DE)**

(72) Erfinder: **Vyvial, Rudolf, Alwin-Mittasch-Platz 10,
D-6700 Ludwigshafen (DE)**
Erfinder: **Taubitz, Christof, Dr., In der Dreispitz 15,
D-6706 Wachenhiem (DE)**
Erfinder: **Schlemmer, Lothar, Duisbergstrasse 1 A,
D-6701 Maxdorf (DE)**
Erfinder: **Bleckmann, Gerhard, Giselherstrasse 9,
D-6840 Lampertheim (DE)**
Erfinder: **Zuerger, Manfred, Holderlandstrasse 2,
D-6920 Sinsheim (DE)**
Erfinder: **Krieger, Heinrich, Hasenkamp 43,
D-4404 Telgte (DE)**
Erfinder: **Thiele, Heino, Dr., An der Froschlache 23,
D-6700 Ludwigshafen (DE)**

ACTORUM AG

# Beschreibung

Die Erfindung betrifft ein Verfahren zur Herstellung von flächenförmigen Gebilden aus Vinylalkoholpolymerisaten durch Verarbeitung einer Vinylalkoholpolymerisat/Wasser-Mischung mit einem Wassergehalt unter 60 Gew.-% in einem Extruder und anschliessendes Formen zu dem flächigen Gebilde.

Filme, Folien und Platten aus Polyvinylalkohol haben in der Praxis, insbesondere wegen ihrer Wasserlöslichkeit, ein breites Anwendungsspektrum, beispielsweise zur Herstellung von Verpakkungsbehältern, als Abdeck- oder Schutzfolien oder auch zur Herstellung von fotopolymeren Druckplatten gefunden. Die Herstellung von Filmen oder Folien aus Polyvinylalkohol ist im Vergleich zu anderen Polymeren jedoch dadurch erschwert, dass Polyvinylalkohol nicht ohne weiteres auf dem üblichen thermoplastischen Weg verarbeitet werden kann. Dies liegt daran, dass die Zersetzungstemperatur des Polyvinylalkohols unterhalb seines Kristallitschmelzpunktes liegt. Für die thermoplastische Verarbeitung, beispielsweise durch Extrusion, ist es daher erforderlich, den Erweichungsbereich des Polyvinylalkohols herabzusetzen. Dies geschieht im allgemeinen durch Einmischen von geeigneten Zusätzen vor der Extrusion des Polyvinylalkohols.

Aus der DE-A Nr. 2114767 ist es bekannt, eine wässerige Lösung von Polyvinylalkohol und weiteren Zusatzstoffen über eine Breitschlitzdüse zu einer Folie zu extrudieren, die anschliessend mit einer anderen Kunststofffolie zu einem Laminat verbunden wird. Bei diesem Verfahren muss jedoch vor der Extrusion zunächst eine wässerige Lösung des Polyvinylalkohols hergestellt werden, als auch muss das Wasser nach der Extrusion der Folie in einem separaten Trocknungsschritt entfernt werden, wozu ein grosser Energieaufwand notwendig ist.

Ferner sind weichmacherhaltige, rieselfähige Polyvinylalkohole für die thermoplastische Verarbeitung und Extrusion bekannt. Solche sogenannten *dry-blends*, wie sie beispielsweise in der US-A Nr. 4215169 und der DE-A1 Nr. 2812684 beschrieben werden, sind trotz ihres relativ hohen Anteils an Weichmacher und gegebenenfalls Wasser noch rieselfähig und lassen sich ohne weitere Hilfsmassnahmen zu Folien oder Platten extrudieren. Sofern diese *dry-blends* Wasser enthalten, braucht dieses nach der Extrusion nicht entfernt zu werden, so dass ein aufwendiger, nachgeschalteter Trocknungsschritt nicht unbedingt erforderlich ist. Die Herstellung dieser Blends erfolgt in Spezialapparaturen (Zwangsmischern) nach einer Technologie, die sehr hohe Ansprüche an die Temperaturführung und deren zeitlichen Verlauf stellt (vgl. DE-A1 Nr. 2812684) und ist insbesondere für die niedermolekularen, niedrigverseiften Polyvinylalkohole problematisch. Für die Weiterverarbeitung dieser Blends in einem Extruder muss ihre Rieselfähigkeit gewährleistet sein. Dies geschieht durch Zusatz von Antiblockmitteln, z.B. hochdispersen Kieselsäuren, was jedoch zu einer Beeinträchtigung der optischen Eigenschaften der hieraus hergestellten Polyvinylalkoholfolien führt.

Aus der DE-B Nr. 1504442 ist ein Verfahren gemäss dem ersten Teil des Anspruchs 1 zur kontinuierlichen Herstellung von Folienbahnen mit hoher Festigkeit aus Polyvinylalkoholen bekannt, bei dem wasserhaltige Vinylalkoholpolymerisate mit einem Wassergehalt unter 60 Gew.-% in einer Schneckenpresse mit Breitschlitzdüse zu Folienbahnen extrudiert und diese gereckt und getrocknet werden. Auch bei diesem Verfahren wird ein vorgefertigtes Polyvinylalkohol/Wasser-Gemisch in den Extruder eingespeist und muss die Folienbahn in einem nachgeschalteten Schritt getrocknet werden, was arbeits- und energieaufwendig ist.

Aufgabe der vorliegenden Erfindung ist es, ein Verfahren zur Extrusion von Polyvinylalkoholen aufzuzeigen, welches es gestattet, in einfacher und wirtschaftlicher Weise unter Einsatz von handelsüblichen Polyvinylalkoholen optisch klare und einwandfreie Filme, Folien oder Platten herzustellen.

Gegenstand der Erfindung ist dementsprechend ein Verfahren zur Herstellung eines flächenförmigen Gebildes aus einem Vinylalkoholpolymerisat durch Verarbeiten einer Vinylalkoholpolymerisat/Wasser-Mischung mit einem Wassergehalt unter 60 Gew.-% in einem Extruder und anschliessendes Formen des flächenförmigen Gebildes, welches gekennzeichnet ist durch Mischen des Vinylalkoholpolymerisats in einem selbstreinigenden Mehrschneckenextruder mit einer solchen Menge an Wasser, die unter Normalbedingungen zur Lösung des Vinylalkoholpolymerisats nicht ausreicht, das sind etwa 5 bis 40 Gew.-% Wasser, bezogen auf das Vinylalkoholpolymerisat, sowie gegebenenfalls mit üblichen Zusatzstoffen; Fördern und Homogenisieren der Mischung unter gleichzeitigem Aufschmelzen des Vinylalkoholpolymerisat/Wasser-Gemisches; Entfernen einer gegebenenfalls überschüssigen Wassermenge sowie sonstiger unerwünschter flüchtiger Bestandteile durch Entgasen der Schmelze; sowie Austrag der Schmelze aus dem Extruder unter gleichzeitigem Formen des flächenförmigen Gebildes.

Es hat sich überraschenderweise gezeigt, dass es zur Extrusion von Polyvinylalkohol nicht notwendig ist, von wässerigen Lösungen oder weichmacherhaltigen Polyvinylalkoholen auszugehen, sondern dass es hinreicht, wenn man handelsübliche Polyvinylalkohole mit einer geringen Menge an Wasser in dem Extruder mischt. Ebenso unerwartet war es, dass man überschüssiges Wasser bereits während der Extrusion aus dem Extruder entfernen kann, ohne dass hierdurch die Qualität des Extrudats in irgendeiner Weise beeinträchtigt oder nachteilig verändert wird, so dass in aller Regel auf einen nachgeschalteten kostenaufwendigen Trocknungsschritt verzichtet werden kann. Durch das erfindungsgemässe Verfahren ist es möglich, Polyvinylalkohol auch ohne Zusatz von weichmachenden Verbindungen zu extrudieren, so dass hierdurch die Herstellung von Folien oder Platten aus Polyvinylalkoholen in einem erheblich breiteren Umfang als bisher möglich wird.

Unter flächenförmigen Gebilden werden im Rahmen dieser Erfindung Filme, Folien, Platten, Bänder u. dgl. aus Vinylalkoholpolymerisaten verstanden. Eingeschlossen sind hierin auch beispielsweise Mehrschichtenelemente und Laminate, bei denen mindestens eine Schicht aus einem Vinylalkoholpolymerisat gebildet ist.

Unter Vinylalkoholpolymerisaten werden im Rahmen dieser Erfindung allgemein Polymere verstanden, deren Polymerhauptkette, vorzugsweise zum überwiegenden Masse, wiederkehrende $CH_2-CH(OH)$-Einheiten enthält. Hierzu gehören Polyvinylalkohol selber, Copolymere aus Vinylalkohol- und anderen Comonomereinheiten sowie Derivate, z.B. Ether und/oder Ester, von Polyvinylalkoholen. Insbesondere sind hierbei die teilverseiften Polyvinylester von Monocarbonsäuren mit 2 bis 4 Kohlenstoffatomen, vor allem die teilverseiften Polyvinylacetate, zu nennen. Der Verseifungsgrad der Polyvinylester liegt im allgemeinen im Bereich von 60 bis 99, vorzugsweise von 80 bis 97 Mol-%. Der Polymerisationsgrad der teilverseiften Polyvinylester kann von 250 bis 3000, insbesondere von 300 bis 2000, betragen. Zu den Vinylalkoholpolymerisaten gehören auch die Umsetzungsprodukte von Polyvinylalkohol oder teilverseiftem Polyvinylacetat z.B. mit Ethylenoxid, wobei diese Umsetzungsprodukte 10 bis 30 Gew.-%, bezogen auf das Umsetzungsprodukt, an chemisch gebundenen Ethylenoxideinheiten enthalten können. Des weiteren seien die acryloierten und/oder methacryloierten Vinylalkoholpolymerisate genannt, wie sie durch Umsetzung von Polyvinylalkohol oder teilverseiften Polyvinylacetaten mit Acryl- und/oder Methacrylsäureanhydrid erhalten werden. Solche (meth)acryloierten Vinylalkoholpolymerisate enthalten im allgemeinen 1 bis 30 Gew.-%, bezogen auf das Umsetzungsprodukt, an Acryloyl- und/oder Methacryloylgruppen.

Zur Durchführung des erfindungsgemässen Verfahrens dienen selbstreinigende Mehrschnekkenextruder, insbesondere 2-Schneckenextruder, wie sie für die Verarbeitung von thermoplastischen Kunststoffen an sich bekannt und üblich sind. Der Extruder besitzt dabei mindestens 2 Einspeiseöffnungen für den Einzug der Einsatzstoffe, mindestens eine Entgasungsöffnung sowie eine Austragsöffnung für die Schmelze. Die produktführende Zone des Extruders ist dabei, beispielsweise über aussenliegende Heizmäntel, temperierbar, wobei es von Vorteil ist, wenn die Temperatur in Produktflussrichtung in einzelnen Zonen unterschiedlich eingestellt werden kann. Die Schnekkengeometrie sowie die Art der Schneckenelemente richten sich in erster Linie nach dem eingesetzten Vinylalkoholpolymerisat sowie den gegebenenfalls auch noch zuzumischenden weiteren Zusatzstoffen. Die Schneckenelemente sind hinsichtlich ihrer Gestaltung und Geometrie vorteilhaft in an sich bekannter Weise in den einzelnen Zonen des Extruders an die jeweiligen dort herrschenden Arbeitsbedingungen (Einzug der Substanzen, Mischen, Homogenisieren, Fördern usw.) angepasst.

Zur Durchführung des erfindungsgemässen Verfahrens werden in den Extruder — in Produktflussrichtung gesehen — zunächst das Vinylalkoholpolymerisat und danach das Wasser eingespeist. Die Menge an Wasser ist dabei so bemessen, dass sie unter Normalbedingungen nicht zur Lösung des Vinylalkoholpolymerisats ausreicht. Sie liegt üblicherweise im Bereich von etwa 5 bis 40 Gew.-%, bezogen auf das Vinylalkoholpolymerisat. Die Wassermenge hängt dabei insbesondere von der Art des eingesetzten Vinylalkoholpolymerisats und der gegebenenfalls mitverwendeten Zusatzstoffe ab. Beispielsweise kann bei den niedermolekularen Vinylalkoholpolymerisaten die Wassermenge etwas niedriger gehalten werden als bei den höhermolekularen Vinylalkoholpolymerisaten. Ebenso ist dann eine geringere Wassermenge hinreichend, wenn in dem erfindungsgemässen Verfahren neben dem Vinylalkoholpolymerisat weitere Zusatzstoffe, wie z.B. niedermolekulare organische Verbindungen, etwa Hydroxyalkyl-(meth)acrylate, oder geringe Mengen der an sich bekannten Weichmacher eingesetzt werden. Der Zusatz einer etwas grösseren Menge an Wasser, beispielsweise über 40 Gew.-%, bezogen auf das Vinylalkoholpolymerisat, ist für das erfindungsgemässe Verfahren — wenn auch nicht erforderlich — so doch im allgemeinen auch nicht schädlich oder nachteilig, da erfindungsgemäss überschüssiges Wasser sowie gegebenenfalls vorhandene, störende weitere flüchtige Bestandteile aus der Schmelze noch vor dem Austrag des Vinylalkoholpolymerisats aus dem Extruder entfernt werden. Allgemein gesagt soll die zugesetzte Wassermenge mindestens so hoch sein, dass hierdurch eine einwandfreie Extrusion des Vinylalkoholpolymerisats ermöglicht wird, wobei es sich gezeigt hat, dass hierzu in jedem Fall Wassermengen hinreichend sind, die zur Lösung des eingesetzten Vinylalkoholpolymerisats unter üblichen Bedingungen nicht ausreichen.

Das Vinylalkoholpolymerisat und das Wasser werden zunächst in dem Extruder im allgemeinen bei Temperaturen im Bereich von 20 bis 100, vorzugsweise von 20 bis 60° C, zur gleichmässigen Verteilung von Vinylalkoholpolymerisat und Wasser gemischt. Hierbei wird wahrscheinlich das Vinylalkoholpolymerisat bereits durch das Wasser angequollen. Anschliessend an diesen Mischvorgang findet das Aufschmelzen des Vinylalkoholpolymerisat/Wasser-Gemisches und Homogenisieren der Schmelze statt. Es hat sich gezeigt, dass hierzu Temperaturen im Bereich von 80 bis 200° C günstig sind. Insbesondere werden in der Aufschmelz- und Homogenisierzone des Extruders Temperaturen von 120 bis 190° C eingestellt. Bei den angegebenen Temperaturen handelt es sich um die Gehäusetemperaturen des Extruders, d.h. um die Temperaturen des Heizmediums. Das Homogenisieren der Schmelze kann dabei in an sich bekannter Weise durch Einsatz von Schnecken mit Knetscheiben oder anderen geeigneten Mischelementen gefördert werden.

Gegebenenfalls in das Vinylalkoholpolymerisat einzumischende Zusatzstoffe können in den Extruder im Prinzip an jeder beliebigen Stelle zwischen Einzug des Vinylalkoholpolymerisats und der Entgasung der Schmelze zur Entfernung unerwünschter flüchtiger Bestandteile eingespeist werden. Beispielsweise ist es möglich, die Zusatzstoffe der homogenen Schmelze aus Vinylalkoholpolymerisat und Wasser zuzumischen. In diesem Fall ist es sinnvoll, nach der Einspeisestelle für die Zusatzstoffe noch eine weitere Homogenisierzone vorzusehen und die Entgasung der Schmelze nach dem Einspeisen der Zusatzstoffe vorzunehmen, um auch mit den Zusatzstoffen eingebrachte unerwünschte flüchtige Bestandteile entfernen zu können. Die Anordnung der einzelnen Zonen ist dabei stets in Produktstromrichtung zu sehen. Ebenso ist es jedoch möglich, die Zusatzstoffe zwischen der Einspeisestelle des Vinylalkoholpolymerisats und der Aufschmelz- und Homogenisierzone in den Extruder einzuspeisen. Beispielsweise können die Zusatzstoffe an der gleichen Stelle wie das Wasser oder auch zusammen mit dem Wasser zugegeben werden. Die Stelle, an welcher man die Zusatzstoffe in den Extruder einspeist, hängt primär von der Art der Zusatzstoffe ab. Wasserlösliche Zusatzstoffe werden z.B. vorteilhafterweise zusammen mit dem Wasser in Form einer wässerigen Lösung zugegeben. Verbindungen mit weichmachender und/oder Gleitmittelwirkung werden vorzugsweise zwischen Einspeisestelle des Vinylalkoholpolymerisats und der Aufschmelz- und Homogenisierzone zugesetzt. Thermisch empfindliche Substanzen werden im allgemeinen erst in die Schmelze eingemischt.

Als Zusatzstoffe, die dem Vinylalkoholpolymerisat zugemischt werden können, kommen die hierfür bekannten und üblichen Verbindungen in Betracht, wie beispielsweise anorganische oder organische Füllstoffe, Pigmente, Farbstoffe, verträgliche gesättigte und/oder ethylenisch ungesättigte niedermolekulare organische Verbindungen, Hitzestabilisatoren usw. Hierzu gehören beispielsweise auch Weichmacher und Gleitmittel. Für die Herstellung von fotopolymeren Druckplatten, wie sie beispielsweise in der eingangs zitierten DE-A Nr. 2114767 beschrieben werden, können dem Vinylalkoholpolymerisat neben verträglichen, fotopolymerisierbaren, ethylenisch ungesättigten, niedermolekularen Verbindungen auch noch Polymerisationsinitiatoren, insbesondere Fotoinitiatoren sowie gegebenenfalls thermische Polymerisationsinhibitoren homogen eingemischt werden.

Zu solchen Zusatzstoffen gehören beispielsweise Tone, Calciumhydroxyd, Calciumcarbonat, Silikate, Aluminate, hydratisierte Silikoaluminate; organische Verbindungen wie langkettige Fettsäuren, Metallsalze der Fettsäuren, Alkohole, insbesondere mehrwertige Alkohole, Amide, Wachse, teilweise oxidierte niedermolekulare Polyethylene, Polyether wie Polyethylenglykol oder Silikone. Beispiele für fotopolymerisierbare ethylenisch ungesättigte Verbindungen sind insbesondere die Hydroxyalkyl(meth)acrylate, wie z.B. die Mono-(meth)acrylate von Ethylenglykol, Propylenglykol oder Butandiol-1,4 sowie die Di- oder Poly-(meth)acrylate von Diolen oder Polyolen, beispielsweise den bereits genannten Diolen, Diethylenglykol, Triethylenglykol, Tetraethylenglykol, Neopentylglykol oder Trimethylolpropan. Zu geeigneten Fotopolymerisationsinitiatoren gehören neben Benzoin und den Benzoinderivaten, wie z.B. Benzoinethern, die aromatischen Diketone, wie Benzil, und Derivate des Benzils, wie Benzildimethylketal oder Benzilmethylethylketal, sowie die bekannten Acylphosphinoxidverbindungen. Bezüglich weiterer Einzelheiten zu den Einsatzstoffen und der Herstellung von fotopolymeren Druckplatten auf Basis von Vinylalkoholpolymerisaten sei auf die einschlägige Fachliteratur, z.B. die DE-A Nr. 2114767 verwiesen.

Die Art und Menge der Zusatzstoffe richtet sich nach der Art des eingesetzten Vinylalkoholpolymerisats sowie insbesondere nach dem angestrebten Verwendungszweck des nach dem erfindungsgemässen Verfahren hergestellten flächenförmigen Gebildes. Im allgemeinen, z.B. bei der Herstellung von Folien für den Verpackungssektor, wird der Anteil an Zusatzstoffen 40, vorzugsweise insbesondere 30 Gew.-%, bezogen auf die Summe von Vinylalkoholpolymerisat und Zusatzstoffen, nicht überschreiten. Für spezielle Anwendungszwecke, beispielsweise die Herstellung von fotopolymeren Druckplatten, kann der Anteil der genannten Zusatzstoffe jedoch auch grösser sein und beispielsweise bis zu 60 oder 65 Gew.-%, bezogen auf die Mischung von Vinylalkoholpolymerisat und allen weiteren Zusatzstoffen, betragen. Das Verhältnis von Vinylalkoholpolymerisat zu fotopolymerisierbarer niedermolekularer Verbindung liegt in solchen Mischungen dabei im allgemeinen im Bereich von 90:10 bis 50:50 Gew.-%, bezogen auf die Summe von Vinylalkoholpolymerisat und fotopolymerisierbarer niedermolekularer Verbindung.

Die homogene Vinylalkoholpolymerisatschmelze, die die gegebenenfalls mitverwendeten Zusatzstoffe bereits eingemischt enthält, wird vor dem Austrag aus dem Extruder in einer Entgasungszone von unerwünschten flüchtigen Bestandteilen befreit. Bei der Entgasung kann insbesondere auch überschüssiges Wasser aus der Schmelze entfernt und der Wassergehalt der Schmelze beispielsweise auf den gewünschten Wassergehalt des Endproduktes eingestellt werden, solange hierdurch nicht die Extrudierbarkeit der Schmelze beeinträchtigt wird. Nach der Entgasung wird die Vinylalkoholpolymerisatschmelze aus dem Extruder durch eine Düse ausgetragen. Die Massetemperatur des Vinylalkoholpolymerisats beim Austragen liegt dabei im allgemeinen im Bereich von 80 bis 130° C.

Das Formen der flächenförmigen Gebilde aus dem Vinylalkoholpolymerisat erfolgt zweckmässiger- und vorteilhafterweise direkt beim Austragen des Extrudats aus dem Extruder. Hierzu können die für das Formen von flächigen Gebilden aus thermoplastischen Kunststoffen üblichen und bekannten Methoden angewandt werden, wie beispielsweise Extrusion durch schlitzförmige Düsen, wie insbesondere Breitschlitzdüsen oder Ringdüsen, als auch das Folienblasverfahren. Letzteres ist insbesondere geeignet zur Herstellung von orientierten oder gestreckten Filmen oder Folien, wie sie beispielsweise im Verpackungssektor zur Anwendung gelangen. Zur Herstellung von ungereckten Folien, Filmen oder Platten, wie sie als Abdeck- oder Schutzfolien Verwendung finden oder als selbsttragende Platten bzw. Schichten von Laminaten zum Einsatz gelangen, wird die Extrusion im allgemeinen mittels Breitschlitzdüsen vorgenommen. Bei der Extrusion über eine Breitschlitzdüse kann die genaue Dickeneinstellung mit hoher Genauigkeit und geringer Schwankungsbreite vorteilhafterweise dadurch vorgenommen werden, dass die extrudierte Folie oder Platte durch einen Zwei- oder Mehrwalzenstuhl geführt wird. Ein solches Verfahren eignet sich vorteilhafterweise auch zur Herstellung von Laminaten oder Verbundplatten, indem man entweder auf einer oder beiden Seiten der Vinylalkoholpolymerisatfolie gleichzeitig eine weitere Folie, z.B. aus einem anderen Kunststoff oder einem Metallblech, mit durch den Walzenstuhl laufen lässt, so dass diese weiteren Folien auf die Oberfläche(n) der Vinylalkoholpolymerisatfolie bzw. -platte auflaminiert und hiermit verbunden werden. Diese Verfahrensweise ist insbesondere bei der Herstellung von Mehrschichtenelementen, wie sie bei der Herstellung von fotopolymeren Druckplatten beispielsweise gemäss der DE-A Nr. 2114767 zur Anwendung gelangen, von Vorteil.

Mit dem erfindungsgemässen Verfahren lassen sich in einfacher und wirtschaftlicher Weise flächenförmige Gebilde direkt aus Vinylalkoholpolymerisaten herstellen, ohne dass hierbei der Einsatz von weichmacherhaltigen Vinylalkoholpolymerisaten notwendig ist. Die nach dem erfindungsgemässen Verfahren in den Vinylalkoholpolymerisatfolien oder -platten noch verbleibende geringe Wassermenge beeinträchtigt die mechanischen, optischen oder anderen anwendungstechnischen Eigenschaften dieser flächenförmigen Gebilde in keiner Weise und braucht nicht durch einen nachträglichen Trocknungsschritt entfernt zu werden. Das erfindungsgemässe Verfahren ist dabei aufgrund der grossen Variationsbreite bezüglich der einzusetzenden Vinylalkoholpolymerisate sowie der gegebenenfalls einzumischenden Zusatzstoffe allgemein und ohne Einschränkung bei der Herstellung von beliebigen flächenförmigen Gebilden aus Vinylalkoholpolymerisaten anwendbar und führt zu Produkten mit einwandfreien, insbesondere auch hervorragenden optischen Eigenschaften.

Die flächenförmigen Gebilde aus den Vinylalkoholpolymerisaten können beispielsweise im Verpackungssektor, bei der Herstellung von Schutz- oder Abdeckfolien oder auch zur Herstellung von Mehrschichtenelementen eingesetzt werden.

Die Erfindung wird durch die nachfolgenden Beispiele weiter erläutert. Die angegebenen Teile und Prozente beziehen sich, sofern nichts anderes gesagt ist, auf das Gewicht.

*Beispiel 1*

In einen selbstreinigenden Zweischneckenextruder mit nebeneinanderliegenden, gleichsinnigdrehenden Schnecken und einem in mehreren Zonen temperierbaren Heizmantel wurden in Produktstromrichtung gesehen zunächst 30 Teile eines teilverseiften Polyvinylacetats (Polymerisationsgrad ca. 300; Verseifungsgrad 82 Mol-%) und danach 10 Teile Wasser eingespeist. Die Komponenten wurden in einer ersten Zone mit einer Manteltemperatur von ca. 40° C gemischt und dann in einer weiteren Zone mit einer Manteltemperatur von 180° C aufgeschmolzen und homogenisiert. Anschliessend wurden in die Schmelze, bei einer reduzierten Manteltemperatur von 100 bis 120° C, 30 Teile Hydroxyethylmethacrylat und 1 Teil Trimethylbenzoyldiphenylphosphinoxid (Fotoinitiator) zugemischt. Nach Homogenisierung der Mischung wurde die Schmelze entgast und dann über eine Breitschlitzdüse bei einer Massetemperatur von ca. 100 bis 110° C ausgetragen. Das Extrudat wurde direkt einem Kalander zugeführt, wo es zwischen zwei Folien aus Polyester zu einer Bahn mit einer Dicke von 2 mm auskalibriert wurde. Nach Abtrennen der Polyesterfolien und vollflächiger Belichtung mit aktinischem Licht wurde eine glasklare stippenfreie Polyvinylalkoholplatte mit einem Wassergehalt von 13% erhalten, der sich im Laufe der Zeit in Abhängigkeit von der Luftfeuchtigkeit auf 4 bis 10% einstellte. Die erhaltene Platte eignete sich sehr gut als nichtbeschlagende Kunstglasscheibe.

*Beispiel 2*

In einem Zweischneckenextruder mit gleichlaufenden, dichtkämmenden Schnecken (Schneckendurchmesser 53 mm, Länge 40 D) wurden 200 Teile eines teilverseiften Polyvinylacetats (Verseifungsgrad 80 bis 82 Mol-%, mittlerer Polymerisationsgrad 500) und 100 Teile eines oxyethylierten teilverseiften Polyvinylacetats (Gehalt an Ethylenoxideinheiten 22%, mittleres Molekulargewicht ca. 30 000) eingebracht und danach 15 Teile Wasser zudosiert. Die Komponenten wurden in einer darauffolgenden Zone des Extruders (Gehäusetemperatur 160° C) homogenisiert; danach wurden bei reduzierter Temperatur (130° C Gehäusetemperatur) 200 Teile eines Gemisches aus Hydroxypropylacrylat und Tetraethylenglykoldimethacrylat (Verhältnis 9 : 1), 20 Teile Benzildimethylketal und 2 Teile 2,6-Ditert.-butyl-p-kresol homogen eingemischt. Anschliessend wurde die Schmelze bei Normaldruck entgast, auf 110° C abgekühlt und durch eine Breitschlitzdüse als ca. 1 mm dicke Folie aus dem Extruder ausgetragen. Durch Aufbringen dieser Folie auf einen mit einer Grundhaftschicht versehenen Stahlträger bei gleichzeitiger Glättung in einem Kalander wurde eine Mehrschichtenplatte erhalten, die durch bildmässige Belichtung mit aktinischem Licht und Entfernen der unbelichteten Schichtbestandteile durch Auswaschen mit Wasser zu einer Hochdruckplatte verarbeitet wurde.

*Beispiel 3*

In einem Zweischneckenextruder (Typ wie in Beispiel 2) wurden — in Produktstromrichtung gesehen — zunächst 190 Teile eines teilverseiften Polyvinylacetats (Verseifungsgrad ca. 80 Mol-%, mittlerer Polymerisationsgrad ca. 500) eindosiert und anschliessend 15 Teile Wasser bei 25° C zugegeben und eingemischt. Danach erfolgte die Zugabe von weiteren 20 Teilen Wasser bei 90° C, nach dessen Einmischung dann noch 30 Teile Glycerin zugemischt wurden. Das Einmischen des Glycerins und das Homogenisieren der Schmelze erfolgten bei 160° C (Gehäusetemperatur). Die homogene Schmelze wurde bei 130° C (Gehäusetemperatur) und 0,8 bar entgast und dann über einen Blaskopf bei 100° C ausgetragen und zu einer Folie geformt, die sich z.B. für Verpackungszwecke eignete.

*Beispiel 4*

In einem Zweischneckenextruder mit gleichlaufenden, dichtkämmenden Schnecken (Durchmesser 53 mm, Länge 50 D) wurden zunächst 300 Teile eines teilverseiften Polyvinylacetats (Verseifungsgrad 82 Mol-%, mittlerer Polymerisationsgrad 450), 15 Teile Wasser gemischt und bei 140° C (Gehäusetemperatur) aufgeschmolzen. Danach wurden weitere 30 Teile Wasser zudosiert und eingemischt und schliesslich 280 Teile Hydroxyethylmethacrylat, 60 Teile Hexandioldiacrylat, 10 Teile Benzildimethylketal und 1 Teil 2,6-Ditert.-butyl-p-kresol eingespeist. Nach Homogenisieren bei 120° C (Gehäusetemperatur) wurde die Schmelze bei gleicher Temperatur unter Normaldruck entgast und dann über eine Breitschlitzdüse als 0,5 mm dicke Folie aus dem Extruder ausgetragen. Durch Auflaminieren dieser Folie auf einen Metallträger erhielt man ein Mehrschichtenelement, dass sich durch bildmässiges Belichten und Entwickeln in Wassser zu einer Hochdruckplatte verarbeiten liess.

**Patentansprüche**

1. Verfahren zur Herstellung eines flächenförmigen Gebildes aus einem Vinylalkoholpolymerisat durch Verarbeiten einer Vinylalkoholpolymerisat/Wasser-Mischung mit einem Wassergehalt unter 60 Gew.-% in einem Extruder und anschliessendes Formen des flächenförmigen Gebildes, gekennzeichnet durch Mischen den Vinylalkoholpolymerisats in einem selbstreinigenden Mehrschneckenextruder mit einer solchen Menge an Wasser, die unter Normalbedingungen zur Lösung des Vinylalkoholpolymerisats nicht ausreicht, das sind etwa 5 bis 40 Gew.-% Wasser, bezogen auf das Vinylalkoholpolymerisat, sowie gegebenenfalls mit üblichen Zusatzstoffen; Fördern und Homogenisieren der Mischung unter Aufschmelzen des Vinylalkoholpolymerisat/Wasser-Gemisches; Entfernen einer gegebenenfalls überschüssigen Wassermenge sowie sonstiger unerwünschter flüchtiger Bestandteile durch Entgasen der Schmelze; sowie Austrag der Schmelze aus dem Extruder unter gleichzeitigem Formen des flächenförmigen Gebildes.

2. Verfahren gemäss Anspruch 1, dadurch gekennzeichnet, dass das Mischen von Vinylalkoholpolymerisat und Wasser bei einer Temperatur im Bereich von 20 bis 100° C und das Aufschmelzen und Homogenisieren bei einer Temperatur im Bereich von 80 bis 200° C erfolgt.

3. Verfahren gemäss einem der beiden Ansprüche 1 oder 2, dadurch gekennzeichnet, dass die Schmelze beim Austragen aus dem Extruder eine Massetemperatur im Bereich von 80 bis 130° C aufweist.

4. Verfahren gemäss den Ansprüchen 1 bis 3, dadurch gekennzeichnet, dass dem Vinylalkoholpolymerisat als Zusatzstoffe anorganische oder organische Füllstoffe, Pigmente, Farbstoffe, verträgliche gesättigte und/oder ethylenisch ungesättigte niedermolekulare organische Verbindungen, Polymerisationsinitiatoren, Hitzestabilisatoren und/oder thermische Polymerisationsinhibitoren eingemischt werden.

**Claims**

1. A process for the production of a sheet-like structure from a vinyl alcohol polymer by processing a vinyl alcohol polymer/water mixture containing less than 60% by weight of water in an extruder, and subsequently shaping the mixture into the sheet-like structure, wherein the vinyl alcohol polymer is mixed, in a self-cleaning multi-screw extruder, with an amount of water which is insufficient to dissolve the polymer under standard conditions of temperature and pressure, i.e. about 5 to 40% by weight, based on the vinyl alcohol polymer, of water, and with optional conventional additives, the mixture is transported and homogenized, and at the same time melted, any excess water present and other undesirable volatile constituents are removed by devolatilizing the melt, and the latter is discharged from the extruder and simultaneously shaped into the sheet-like structure.

2. A process as claimed in Claim 1, wherein mixing of the vinyl alcohol polymer with the water is carried out at from 20 to 100° C, and melting and homogenization are carried out at from 80 to 200° C.

3. A process as claimed in one of Claims 1 or 2, wherein the melt is at 80 to 130° C when it is discharged from the extruder.

4. A process as claimed in Claims 1 to 3, wherein the additives mixed into the vinyl alcohol polymer are inorganic or organic fillers, pigments, dyes, compatible saturated and/or ethylenically unsaturated low molecular weight organic compounds, polymerization initiators, thermal stabilizers and/or thermal polymerization inhibitors.

**Revendications**

1. Procédé de fabrication d'un article plan à partir d'un polymère de l'alcool vinylique, par traitement d'un mélange d'un polymère d'alcool vinylique et d'eau, avec une teneur en eau inférieure à 60% en poids, dans une extrudeuse, suivi du formage de l'article plan, caractérisé en ce que l'on malaxe le polymère d'alcool vinylique, dans une extrudeuse autonettoyante à plusieurs vis, avec une proportion d'eau insuffisante pour dissoudre le polymère d'alcool vinylique dans les conditions normales, soit environ 5 à 40% du poids du polymère d'alcool vinylique, en incorporant éventuellement des additifs usuels, on homogénéise le mélange par fusion du mélange de polymère d'alcool vinylique et d'eau, on élimine l'excès éventuel d'eau et les autres ingrédients volatils indésirables par un dégazage de la masse fondue, et on extrude la masse fondue avec formage concomitant de l'article plan.

2. Procédé suivant la revendication 1, caractérisé en ce que le malaxage du polymère d'alcool vinylique et de l'eau est effectué dans une gamme de températures de 20 à 100° C, et la fusion et l'homogénéisation sont réalisées dans une gamme de températures de 80 à 200° C.

3. Procédé suivant l'une des revendications 1 ou 2, caractérisé en ce que la masse fondue se trouve, à la sortie de l'extrudeuse, à une température dans la gamme de 80 à 130° C.

4. Procédé suivant l'une des revendications 1 à 3, caractérisé en ce que l'on incorpore au polymère d'alcool vinylique, en tant qu'additifs, des matières de charge inorganiques ou organiques, des pigments, des colorants, des substances organiques saturées et/ou à insaturation éthylénique compatibles de bas poids moléculaire, des initiateurs de la polymérisation, des agents de stabilisation à la chaleur et/ou des agents d'inhibition d'une polymérisation thermique.